# EUROPEAN PATENT APPLICATION

(11) **EP 4 583 613 A1**
(43) Date of publication of application: **09.07.2025**
(21) Application number: 23870300.3
(22) Date of filing: 12.09.2023
(51) Int. Cl.: H04W 72/231

(54) **DATA TRANSMISSION METHOD AND RELATED PRODUCT**

(30) Priority: 29.09.2022 CN 202211202634
(71) Applicant: Huawei Technologies Co., Ltd., Shenzhen, Guangdong 518129 (CN)
(72) Inventor: FAN, Qiang, Shenzhen, Guangdong 518129 (CN)
(74) Representative: Gill Jennings & Every LLP
(86) International application number: PCT/CN2023/118251
(87) International publication number: WO 2024/067062

(57) **Abstract**

This application discloses a data transmission method and a related product. The data transmission method includes: determining a first logical channel based on attribute information of an uplink transmission resource and resource mapping restriction information of a logical channel, and allocating, from the uplink transmission resource, a transmission resource to at least one logical channel in the first logical channel; determining a second logical channel when there is a remaining resource in the uplink transmission resource, and allocating the remaining resource to at least one logical channel in the second logical channel; and transmitting, on the uplink transmission resource, data on the at least one piece of logic in the first logical channel and data on the at least one logical channel in the second logical channel. According to this application, a transmission resource can be fully utilized, and a waste of resources can be reduced.

## Description

This application claims priority to Chinese Patent Application No. 202211202634.6, filed with the China National Intellectual Property Administration on September 29, 2022 and entitled "DATA TRANSMISSION METHOD AND RELATED PRODUCT", which is incorporated herein by reference in its entirety.

### TECHNICAL FIELD

This application relates to the field of communication technologies, and in particular, to a data transmission method and a related product.

### BACKGROUND

After a terminal device receives an uplink transmission resource indicated by an uplink grant, a medium access control (Medium Access Control, MAC) entity of the terminal device needs to perform a logical channel prioritization (Logical Channel Prioritization, LCP) process to generate a MAC layer protocol data unit (Protocol Data Unit, PDU), and submit the MAC layer PDU to a physical layer entity for sending on the indicated uplink transmission resource. The LCP process includes two steps: a logical channel selection process and a resource allocation process. In the logical channel selection process, a logical channel that adapts to attribute information of a transmission resource is selected. In the resource allocation process, the uplink transmission resource can be allocated to only the logical channel that adapts to the attribute information of the transmission resource. When there is no sufficient to-be-transmitted data on the selected logical channel, that is, there is a remaining resource in the uplink transmission resource, the terminal device can only use padding bits for padding. Consequently, this manner easily causes a waste of the uplink transmission resource.

### SUMMARY

This application provides a data transmission method and a related product, to fully utilize an uplink transmission resource and reduce a waste of resources.

According to a first aspect, an embodiment of this application provides a data transmission method. The method may be performed by a terminal device, or may be performed by a component (for example, a processor, a chip, or a chip system) of the terminal device. The data transmission method may include: The terminal device determines, based on attribute information of an uplink transmission resource and resource mapping restriction information of a logical channel, a first logical channel for data transmission on the uplink transmission resource, where the first logical channel includes one or more logical channels, and allocates, from the uplink transmission resource, a transmission resource to at least one logical channel in the first logical channel. The uplink transmission resource may be a pre-configured resource or a dynamically scheduled resource. The attribute information of the uplink transmission resource may include but is not limited to at least one of the following: a subcarrier spacing index, PUSCH transmission duration, cell information, physical layer priority information, and the like.

The resource mapping restriction information of the logical channel may also be referred to as LCP restriction information, and the resource mapping restriction information of the logical channel indicates a condition that needs to be met by a resource to which data on the logical channel is mapped. For example, the resource mapping restriction information of the logical channel includes but is not limited to at least one of the following: an allowed subcarrier spacing (allowedSCS-List), a maximum PUSCH length (maxPUSCH-Duration), an allowed serving cell (allowedServingCells), and an allowed physical layer priority index value (allowedPHY-PriorityIndex).

The terminal device determines a second logical channel when there is a remaining resource in the uplink transmission resource, where the second logical channel includes one or more logical channels, and allocates the remaining resource to at least one logical channel in the second logical channel.

The terminal device transmits, on the uplink transmission resource, data on the at least one piece of logic in the first logical channel and data on the at least one logical channel in the second logical channel.

According to the method described in the first aspect, the terminal device determines the first logical channel based on the attribute information of the uplink transmission resource and resource mapping information of the logical channel, and allocates, from the uplink transmission resource, the transmission resource to the at least one logical channel in the first logical channel. When there is a remaining resource in the uplink transmission resource, the remaining resource may be further allocated to the at least one logical channel in the second logical channel, to fully utilize the remaining resource, improve resource utilization, and reduce a waste of resources.

In a possible implementation, the second logical channel includes a logical channel other than the first logical channel in a plurality of logical channels of the terminal device; or
the second logical channel includes a logical channel associated with a logical channel in the first logical channel; or
the second logical channel includes an indicated logical channel on which sharing of the remaining resource is allowed.

According to the method, the second logical channel on which the remaining resource can be shared is used as an example, so that the remaining resource is allocated to the at least one logical channel in the second logical channel, to flexibly control a logical channel on which the remaining resource can be shared.

In a possible implementation, the logical channel associated with the logical channel in the first logical channel includes at least one of the following:
a logical channel that belongs to a same data radio bearer DRB as the logical channel in the first logical channel;
a logical channel that belongs to a same protocol data unit PDU session as the logical channel in the first logical channel; and
a pre-configured logical channel on which resource sharing is allowed to be performed with the logical channel in the first logical channel.

According to the method, the logical channel associated with the logical channel in the first logical channel is used as an example, to flexibly control a logical channel on which the remaining resource can be shared.

In a possible implementation, that the terminal device determines the second logical channel when there is a remaining resource in the uplink transmission resource includes:
The terminal device determines the second logical channel when there is a remaining resource in the uplink transmission resource, and a maximum amount of data allowed to be transmitted on the remaining resource is greater than or equal to a data amount threshold.

According to the method, the terminal device shares the remaining resource with the at least one logical channel in the second logical channel only when there is a remaining resource in the uplink transmission resource and a maximum amount of data allowed to be transmitted on the remaining resource is greater than or equal to the data amount threshold, to balance full utilization of resources and complexity reduction.

In a possible implementation, the method further includes:
The terminal device receives first indication information from a network device, where the first indication information indicates that when there is a remaining resource in the uplink transmission resource, sharing of the remaining resource is allowed, and/or the first indication information indicates the second logical channel on which sharing of the remaining resource is allowed.

That the terminal device determines the second logical channel includes:
The terminal device determines the second logical channel based on the first indication information.

According to the method, the terminal device may use a resource as a granularity to indicate that the terminal device may share a remaining resource in the uplink transmission resource, to flexibly control a logical channel on which the remaining resource is shared.

In a possible implementation, the first indication information includes bit indication information, and when the bit indication information is a first state value, the bit indication information indicates that when there is a remaining resource in the uplink transmission resource, sharing of the remaining resource is allowed.

According to the method, the bit indication information is used to indicate that when there is a remaining resource in the uplink transmission resource, sharing of the remaining resource is allowed, so that bits are saved.

In a possible implementation, the first indication information includes a first identifier or includes an identifier of a logical channel in the second logical channel, and the first identifier indicates a logical channel in the second logical channel.

According to the method, the network device may indicate, by using the first indication information, a logical channel on which the remaining resource in the uplink transmission resource can be shared, to flexibly control a logical channel on which the remaining resource is shared.

In a possible implementation, the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

In a possible implementation, the terminal device receives second indication information from a network device, where the second indication information indicates that resource sharing is allowed on the one or more logical channels in the first logical channel, and/or the second indication information indicates a logical channel on which resource sharing is allowed to be performed with the one or more logical channels in the first logical channel.

That the terminal device determines the second logical channel includes:
The terminal device determines the second logical channel based on the second indication information.

According to the method, whether resource sharing is allowed is indicated by using a logical channel as a granularity. In this implementation, the uplink transmission resource can be further allocated to the at least one logical channel in the second logical channel only when a resource is allocated to a specific logical channel and there is a remaining resource, and a control granularity is more flexible.

In a possible implementation, the second indication information includes sharing information respectively corresponding to the one or more logical channels in the first logical channel, and the sharing information indicates that resource sharing is allowed on a corresponding logical channel.

According to the method, whether resource sharing is allowed on a corresponding logical channel is configured by using sharing information of the logical channel, and a control granularity is more flexible.

In a possible implementation, that the terminal device determines the second logical channel based on the second indication information includes:
The terminal device determines the second logical channel when sharing information respectively corresponding to all logical channels in the first logical channel indicates that resource sharing is allowed.

According to the method, a remaining resource is shared only when the sharing information corresponding to all the logical channels in the first logical channel indicates that resource sharing is allowed, to strictly control a condition for sharing the remaining resource.

In a possible implementation, the sharing information includes bit indication information, and when the bit indication information is a second state value, the bit indication information indicates that resource sharing is allowed on a corresponding logical channel.

According to the method, whether resource sharing is allowed on a corresponding logical channel is indicated by using the bit indication information, so that bit instructions can be reduced.

In a possible implementation, the second indication information includes sharing information respectively corresponding to the one or more logical channels in the first logical channel, and the sharing information indicates a logical channel on which resource sharing is allowed to be performed with a corresponding logical channel.

According to the method, sharing information of a logical channel is used to indicate a logical channel on which resource sharing is allowed to be performed with the logical channel, so that an association relationship between logical channels is flexibly controlled, and logical channels on which the remaining resource is shared are determined.

In a possible implementation, the sharing information includes a second identifier or an identifier of the logical channel on which resource sharing is allowed to be performed with the corresponding logical channel, and the second identifier indicates the logical channel on which resource sharing is allowed to be performed with the corresponding logical channel.

According to the method, the second identifier or the identifier of the logical channel in the sharing information may be used to indicate a logical channel on which resource sharing is allowed to be performed with logical information corresponding to the sharing information, so that logical channels on which resource sharing is performed can be flexibly controlled.

In a possible implementation, the second indication information is carried in a configuration information element of a logical channel.

According to the method, the second indication information is carried in the configuration information element of the logical channel for indication. This is compatible with an existing system, and avoids generation of an additional information element.

In a possible implementation, the remaining resource includes a resource other than a first resource in the uplink transmission resource, or a resource other than a second resource in the uplink transmission resource; and
the first resource is used to satisfy transmission of data buffered on the at least one logical channel in the first logical channel, and the second resource is used to satisfy a prioritized bit rate PBR respectively corresponding to the at least one logical channel in the first logical channel.

According to the method, the remaining resource in the uplink transmission resource may be shared after the transmission of the data buffered on the at least one logical channel in the first logical channel is met, so that the transmission of the data buffered on the first logical channel is preferentially ensured. Alternatively, the remaining resource in the uplink transmission resource may be shared after the PBR respectively corresponding to the at least one logical channel in the first logical channel is met, so that when the PBR of the at least one logical channel in the first logical channel is ensured, the resource is further shared with the at least one logical channel in the second logical channel, so that data buffered on the at least one logical channel in the second logical channel can also be sent in time.

According to a second aspect, an embodiment of this application provides a data transmission method. The method may be performed by a network device, or may be performed by a component (for example, a processor, a chip, or a chip system) of the network device. The data transmission method may include: The network device sends first indication information to a terminal device, where the first indication information indicates that when there is a remaining resource in an uplink transmission resource, sharing of the remaining resource is allowed, and/or the first indication information indicates a second logical channel on which sharing of a remaining resource in uplink transmission resource is allowed.

The network device receives data on at least one logical channel in a first logical channel and data on at least one logical channel in a second logical channel that are transmitted by the terminal device on the uplink transmission resource, where the first logical channel includes one or more logical channels, and the second logical channel includes one or more logical channels.

According to the method described in the second aspect, a resource is used as a granularity to indicate that the terminal device can share the remaining resource in the uplink transmission resource, to flexibly control sharing of the remaining resource in the uplink transmission resource.

In a possible implementation, the first indication information includes bit indication information, and when the bit indication information is a first state value, the bit indication information indicates that when there is a remaining resource in the uplink transmission resource, sharing of the remaining resource is allowed.

In a possible implementation, the first indication information includes a first identifier or includes an identifier of a logical channel in the second logical channel, and the first identifier indicates a logical channel in the second logical channel.

In a possible implementation, the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

For beneficial effects of the possible implementations of the second aspect, refer to the descriptions in the possible implementations of the first aspect. Details are not described herein again.

According to a third aspect, an embodiment of this application provides a data transmission method. The method may be performed by a network device, or may be performed by a component (for example, a processor, a chip, or a chip system) of the network device. The data transmission method may include: The network device sends second indication information to a terminal device, where the second indication information indicates that resource sharing is allowed on one or more logical channels in a first logical channel, and/or the second indication information indicates a logical channel on which resource sharing is allowed to be performed with one or more logical channels in a first logical channel.

The network device receives data on at least one logical channel in the first logical channel and data on at least one logical channel in a second logical channel that are transmitted by the terminal device on an uplink transmission resource, where the first logical channel includes one or more logical channels, and the second logical channel includes one or more logical channels.

According to the method described in the second aspect, a logical channel is used as a granularity to indicate that resource sharing is allowed on the one or more logical channels in the first logical channel, and/or indicate a logical channel on which resource sharing is allowed to be performed with the one or more logical channels in the first logical channel, so that resource sharing is controlled to be performed when there is a remaining resource in the uplink transmission resource after a resource is allocated to a specific logical channel. This has a more flexible granularity of control.

In a possible implementation, the second indication information includes sharing information respectively corresponding to the one or more logical channels in the first logical channel, and the sharing information indicates that resource sharing is allowed on a corresponding logical channel.

In a possible implementation, the sharing information includes bit indication information, and when the bit indication information is a second state value, the bit indication information indicates that resource sharing is allowed on a corresponding logical channel.

In a possible implementation, the second indication information includes sharing information respectively corresponding to the one or more logical channels in the first logical channel, and the sharing information indicates a logical channel on which resource sharing is allowed to be performed with a corresponding logical channel.

In a possible implementation, the sharing information includes a second identifier or an identifier of the logical channel on which resource sharing is allowed to be performed with the corresponding logical channel, and the second identifier indicates the logical channel on which resource sharing is allowed to be performed with the corresponding logical channel.

In a possible implementation, the second indication information is carried in a configuration information element of a logical channel.

For beneficial effects of the possible implementations of the third aspect, refer to the descriptions in the possible implementations of the first aspect. Details are not described herein again.

According to a fourth aspect, an embodiment of this application provides a communication apparatus. The communication apparatus includes:
a processing unit, configured to determine, based on attribute information of an uplink transmission resource and resource mapping restriction information of a logical channel, a first logical channel for data transmission on the uplink transmission resource, where the first logical channel includes one or more logical channels, and allocate, from the uplink transmission resource, a transmission resource to at least one logical channel in the first logical channel, where
the processing unit is further configured to determine a second logical channel when there is a remaining resource in the uplink transmission resource, where the second logical channel includes one or more logical channels, and allocate the remaining resource to at least one logical channel in the second logical channel; and
a transceiver unit, configured to transmit, on the uplink transmission resource, data on the at least one piece of logic in the first logical channel and data on the at least one logical channel in the second logical channel.

In a possible implementation, the second logical channel includes a logical channel other than the first logical channel in a plurality of logical channels of the terminal device; or
the second logical channel includes a logical channel associated with a logical channel in the first logical channel; or
the second logical channel includes an indicated logical channel on which sharing of the remaining resource is allowed.

In a possible implementation, the logical channel associated with the logical channel in the first logical channel includes at least one of the following:
a logical channel that belongs to a same data radio bearer DRB as the logical channel in the first logical channel;
a logical channel that belongs to a same protocol data unit PDU session as the logical channel in the first logical channel; and
a pre-configured logical channel on which resource sharing is allowed to be performed with the logical channel in the first logical channel.

In a possible implementation, the processing unit is specifically configured to determine, by the terminal device, the second logical channel when there is a remaining resource in the uplink transmission resource, and a maximum amount of data allowed to be transmitted on the remaining resource is greater than or equal to a data amount threshold.

In a possible implementation, the transceiver unit is further configured to receive first indication information from a network device, where the first indication information indicates that when there is a remaining resource in the uplink transmission resource, sharing of the remaining resource is allowed, and/or the first indication information indicates the second logical channel on which sharing of the remaining resource is allowed.

The processing unit is specifically configured to determine the second logical channel based on the first indication information.

In a possible implementation, the first indication information includes bit indication information, and when the bit indication information is a first state value, the bit indication information indicates that when there is a remaining resource in the uplink transmission resource, sharing of the remaining resource is allowed.

In a possible implementation, the first indication information includes a first identifier or includes an identifier of a logical channel in the second logical channel, and the first identifier indicates a logical channel in the second logical channel.

In a possible implementation, the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

In a possible implementation, the transceiver unit is further configured to receive second indication information from a network device, where the second indication information indicates that resource sharing is allowed on the one or more logical channels in the first logical channel, and/or the second indication information indicates a logical channel on which resource sharing is allowed to be performed with the one or more logical channels in the first logical channel.

The processing unit is specifically configured to determine the second logical channel based on the second indication information.

In a possible implementation, the second indication information includes sharing information respectively corresponding to the one or more logical channels in the first logical channel, and the sharing information indicates that resource sharing is allowed on a corresponding logical channel.

In a possible implementation, the processing unit is specifically configured to determine the second logical channel when sharing information respectively corresponding to all logical channels in the first logical channel indicates that resource sharing is allowed.

In a possible implementation, the sharing information includes bit indication information, and when the bit indication information is a second state value, the bit indication information indicates that resource sharing is allowed on a corresponding logical channel.

In a possible implementation, the second indication information includes sharing information respectively corresponding to the one or more logical channels in the first logical channel, and the sharing information indicates a logical channel on which resource sharing is allowed to be performed with a corresponding logical channel.

In a possible implementation, the sharing information includes a second identifier or an identifier of the logical channel on which resource sharing is allowed to be performed with the corresponding logical channel, and the second identifier indicates the logical channel on which resource sharing is allowed to be performed with the corresponding logical channel.

In a possible implementation, the second indication information is carried in a configuration information element for configuring a logical channel.

In a possible implementation, the remaining resource includes a resource other than a first resource in the uplink transmission resource, or a resource other than a second resource in the uplink transmission resource; and
the first resource is used to satisfy transmission of data buffered on the at least one logical channel in the first logical channel, and the second resource is used to satisfy a prioritized bit rate PBR respectively corresponding to the at least one logical channel in the first logical channel.

According to a fifth aspect, an embodiment of this application provides a communication apparatus. The communication apparatus includes:
a transceiver unit, configured to send first indication information to a terminal device, where the first indication information indicates that when there is a remaining resource in an uplink transmission resource, sharing of the remaining resource is allowed, and/or the first indication information indicates a second logical channel on which sharing of a remaining resource in an uplink transmission resource is allowed.

The transceiver unit is further configured to receive data on at least one logical channel in a first logical channel and data on at least one logical channel in a second logical channel that are transmitted by the terminal device on the uplink transmission resource, where the first logical channel includes one or more logical channels, and the second logical channel includes one or more logical channels.

In a possible implementation, the first indication information includes bit indication information, and when the bit indication information is a first state value, the bit indication information indicates that when there is a remaining resource in the uplink transmission resource, sharing of the remaining resource is allowed.

In a possible implementation, the first indication information includes a first identifier or includes an identifier of a logical channel in the second logical channel, and the first identifier indicates a logical channel in the second logical channel.

In a possible implementation, the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

According to a sixth aspect, an embodiment of this application provides a communication apparatus. The communication apparatus includes:
a transceiver unit, configured to send second indication information to a terminal device, where the second indication information indicates that resource sharing is allowed on one or more logical channels in a first logical channel, and/or the second indication information indicates a logical channel on which resource sharing is allowed to be performed with one or more logical channels in a first logical channel.

The transceiver unit is further configured to receive data on at least one logical channel in the first logical channel and data on at least one logical channel in a second logical channel that are transmitted by the terminal device on an uplink transmission resource, where the first logical channel includes one or more logical channels, and the second logical channel includes one or more logical channels.

In a possible implementation, the second indication information includes sharing information respectively corresponding to the one or more logical channels in the first logical channel, and the sharing information indicates that resource sharing is allowed on a corresponding logical channel.

In a possible implementation, the sharing information includes bit indication information, and when the bit indication information is a second state value, the bit indication information indicates that resource sharing is allowed on a corresponding logical channel.

In a possible implementation, the second indication information includes sharing information respectively corresponding to the one or more logical channels in the first logical channel, and the sharing information indicates a logical channel on which resource sharing is allowed to be performed with a corresponding logical channel.

In a possible implementation, the sharing information includes a second identifier or an identifier of the logical channel on which resource sharing is allowed to be performed with the corresponding logical channel, and the second identifier indicates the logical channel on which resource sharing is allowed to be performed with the corresponding logical channel.

In a possible implementation, the second indication information is carried in a configuration information element of a logical channel.

According to a seventh aspect, an embodiment of this application provides a communication apparatus. The communication apparatus includes a processor, configured to perform the method according to any possible implementation of the first aspect to the third aspect. Alternatively, the processor is configured to execute a program stored in a memory. When the program is executed, the method according to any possible implementation of the first aspect to the third aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to an eighth aspect, an embodiment of this application provides a communication apparatus, where the communication apparatus includes a logic circuit and an interface, the logic circuit is coupled to the interface, the interface is configured to receive information, and the logic circuit is configured to perform a processing operation.

According to a ninth aspect, an embodiment of this application provides a computer-readable storage medium. The computer-readable storage medium is configured to store a computer program, and when the computer program is run on a computer, the method according to any possible implementation of the first aspect to the third aspect is performed.

According to a tenth aspect, an embodiment of this application provides a computer program product. The computer program product includes a computer program or computer code. When the computer program product runs on a computer, the method according to any possible implementation of the first aspect to the third aspect is performed.

According to an eleventh aspect, an embodiment of this application provides a computer program. When the computer program is run on a computer, the method according to any possible implementation of the first aspect to the third aspect is performed.

According to a twelfth aspect, an embodiment of this application provides a wireless communication system. The wireless communication system includes a network device and a terminal device.

For technical effects achieved in the fourth aspect to the twelfth aspect, refer to the technical effects of the first aspect to the third aspect or beneficial effects in the following method embodiments. Details are not described herein again.

### BRIEF DESCRIPTION OF DRAWINGS

FIG. 1 is a diagram of an LCP process according to an embodiment of this application;
FIG. 2 is a diagram of a communication system according to an embodiment of this application;
FIG. 3 is a schematic flowchart of a data transmission method according to an embodiment of this application;
FIG. 4a is a schematic flowchart of another data transmission method according to an embodiment of this application;
FIG. 4b is a diagram of a configuration information element according to an embodiment of this application;
FIG. 5a is a schematic flowchart of still another data transmission method according to an embodiment of this application;
FIG. 5b is an example of a correspondence between a logical channel and sharing information according to an embodiment of this application; and
FIG. 6 to FIG. 8 are diagrams of structures of communication apparatuses according to embodiments of this application.

### DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or alternative embodiment exclusive from another embodiment. It may be understood explicitly and implicitly by a person skilled in the art that embodiments described herein may be combined with other embodiments.

In this application, "at least one (item)" means one or more, "a plurality of" means two or more, and "at least two (items)" means two or more than three (including three). The term "and/or" is used to describe an association relationship for describing associated objects and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following" or a similar expression thereof means any combination of these items. For example, at least one of a, b, or c may represent: a, b, c, "a and b", "a and c", "b and c", or "a, b, and c".

Before the method in this application is described in detail, some concepts in this application are first briefly described.

### 1. LCP process

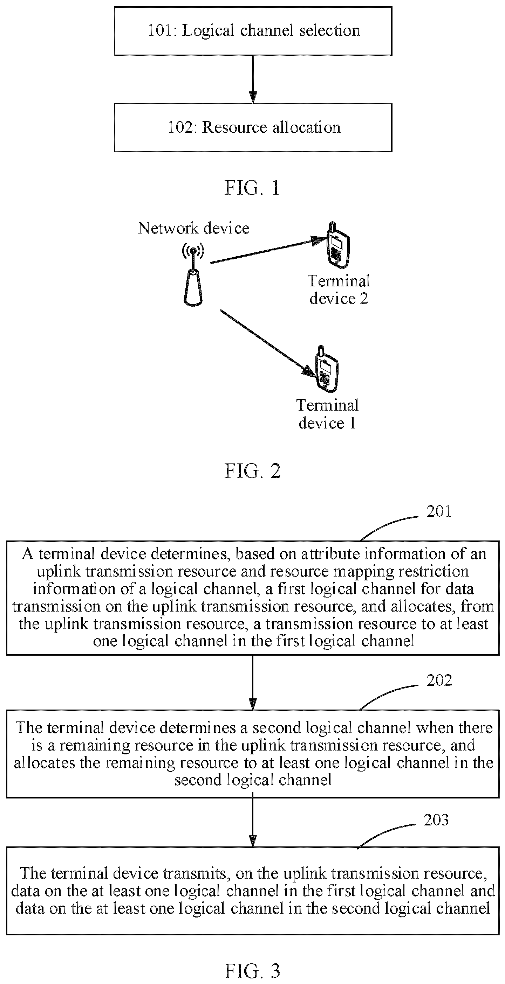

The following describes the LCP process with reference to FIG. 1.

### 101: Logical channel selection

When indicating an uplink transmission resource to a MAC layer, a physical layer of a terminal device indicates uplink transmission information (Uplink transmission information). The uplink transmission information includes attribute information of the uplink transmission resource, including a subcarrier spacing index, physical uplink shared channel (Physical Uplink Shared CHannel, PUSCH) transmission duration, cell information, physical layer priority information, and the like. In addition, when configuring a logical channel, a base station configures some LCP restrictions for the logical channel, for example, including:
(a) Allowed subcarrier spacing (allowedSCS-List): indicates that data on the logical channel can be mapped only to a resource with the subcarrier spacing indicated by this parameter. If this parameter is not configured, it indicates that the data on the logical channel can be mapped to a resource with any subcarrier spacing.
(b) Maximum PUSCH length (maxPUSCH-Duration): indicates that data on the logical channel can be mapped only to a resource whose PUSCH length is less than the indicated maximum PUSCH length. If this parameter is not configured, it indicates that the data on the logical channel can be mapped to a resource with any PUSCH length.
(c) Allowed serving cell (allowedServingCells): indicates that data on the logical channel can be mapped only to a resource of the cell indicated by this parameter. If this parameter is not configured, it indicates that the data on the logical channel can be mapped to a resource of any cell.
(d) Allowed physical layer priority index value (allowedPHY-PriorityIndex): indicates that data on the logical channel can be mapped only to a resource with an allowed physical layer priority that is indicated. If this parameter is not configured, it indicates that the data on the logical channel can be mapped to any resource.

For an uplink transmission resource, a MAC entity of the terminal device may select, based on attribute information of the uplink transmission resource and an LCP restriction configured for each logical channel, a logical channel that can be used for data transmission on the transmission resource.

### 102: Resource allocation

After corresponding logical channels are selected in step 101, the MAC entity of the terminal device allocates the uplink transmission resource to the selected logical channels. When configuring a logical channel, the base station configures a priority, a prioritized bit rate (prioritized Bit Rate, PBR), and bucket size duration (Bucket Size Duration, BSD) of the logical channel. For each logical channel, the MAC entity maintains a variable Bj, and Bj is increased by PBR×T at an interval of time T. If a value of Bj exceeds PBR×BSD, Bj is set to PBR×BSD. The resource allocation specifically includes the following sub-steps:
Step a: In the logical channels selected in step 101, for logical channels that satisfy Bj>0, resources of PBR values are allocated in descending order of priorities. For example, if the logical channels that satisfy Bj>0 include a logical channel 1 and a logical channel 2, and a priority of the logical channel 1 is higher than a priority of the logical channel 2, a resource that meets a PBR of the logical channel 1 is first allocated to the logical channel 1, and if there is a remaining resource, a resource that meets a PBR of the logical channel 2 is allocated to the logical channel 2.
Step b: Bj corresponding to each logical channel to which a resource is allocated is reduced by a value of an amount of the allocated resource.
Step c: If there is still a resource remaining, resources are allocated, in strict descending order of logical channel priorities, to the logical channels selected in step 101, until there is no data on the logical channels or all resources are allocated. That is, in this step, a PBR of a logical channel is not considered, but only a priority of the logical channel is considered, and a resource is preferentially allocated, from the remaining resource, to a logical channel with a higher priority. For example, if the remaining resource may be used for transmission of 80-byte data, and there is still 50-byte data on a logical channel with a highest priority, the remaining resource is preferentially allocated to the logical channel with the highest priority, a resource that may be used for transmission of 30-byte data remains, and the resource is allocated to a logical channel with a second lowest priority, and so on, until there is no data on the selected logical channels or all resources are allocated.

### 2. Extended reality (eXtended Reality, XR)

Extended reality (eXtended Reality, XR) is one of 5G multimedia applications that are currently given emphasized consideration in the industrial field, and specifically refers to various virtual-reality combined environments and human-machine interaction that are achieved through the use of a computing technology and a wearable device. The XR may specifically include but is not limited to the following typical forms: augmented reality (Augmented Reality, AR),
mixed reality (Mixed Reality, MR), virtual reality (Virtual Reality, VR), cloud gaming (Cloud Gaming, CG), and the like
XR service data usually includes uplink service data and downlink service data. The following separately describes characteristics of the XR downlink service data and the XR uplink service data. The XR downlink service data may arrive at a data frame on a frequency of 60 Hz, a size of the data frame is large, and random jitter occurs.

For the XR uplink service data, different types of services have different characteristics. For example, for a CG/VR service, uplink CG/VR data arrives in a shorter periodicity, a size of a data packet is small, and no jitter occurs. An AR service may arrive at a frame rate, and a size of a data frame fluctuates, and random jitter exists.

Based on characteristics of XR uplink and downlink services, a pre-configured resource (for example, a configured grant) is suitable for transmission of an uplink CG/VR service, and dynamically scheduled resources are more suitable for transmission of the downlink XR service and an uplink AR service.

AR service data may include a plurality of different types of data streams, for example, may include a gesture or control data stream, an I-frame data stream in a video, and a P-frame data stream in a video. Characteristics and transmission quality requirements of the plurality of data streams are different, and different logical channels are suitable for transmission on an air interface side. For example, an I-frame video stream is more important than a P-frame video stream and has a higher reliability requirement.

This application may be applied to protocol frameworks of a plurality of wireless communication systems. The wireless communication system may include but is not limited to a long term evolution (long term evolution, LTE) system, a new radio access technology (new radio access technology, NR) system, a future evolved communication system, and the like. The future evolved communication system is, for example, a future network or a 6th generation communication system.

This application may be applied to a plurality of mobile communication scenarios of the foregoing wireless communication system, for example, uplink/downlink transmission between a network device and a terminal device or point-to-point transmission between terminal devices, multi-hop/relay transmission between a network device and a terminal device, and dual connectivity (dual connectivity, DC) or multi-connectivity between a plurality of network devices and a plurality of terminal devices.

FIG. 2 is a diagram of a system architecture of a communication system according to this application. It may be understood that FIG. 2 is merely an example, and does not impose a limitation on a network architecture applicable to this application. In addition, transmission such as uplink transmission, downlink transmission, access link transmission, backhaul (backhaul) link transmission, and sidelink (sidelink) transmission is not limited in this application.

FIG. 2 is a diagram of a network architecture to which an embodiment of this application is applied. The network architecture shown in FIG. 2 includes a network device, a terminal device 1, and a terminal device 2. There may be one or more network devices, and there may be one or more terminal devices.

It may be understood that a quantity and a form of devices shown in FIG. 2 are used as an example, and do not constitute a limitation on embodiments of this application. For example, in an actual application, two or more network devices may be included.

In embodiments of this application, the network device is an apparatus deployed in a radio access network to provide a wireless communication function for the terminal device. The network device may include various forms of macro base stations, micro base stations (also referred to as small cells), relay stations, access points, and the like. In systems using different radio access technologies, names of the network device may be different, for example, an eNB or an eNodeB (evolved NodeB) in LTE (long term evolution, long term evolution). Alternatively, the network device may be a radio controller in a CRAN (cloud radio access network, cloud radio access network) scenario. Alternatively, the network device may be a base station device in a 5G network or a network device in a future evolved network. Alternatively, the network device may be a wearable device or an in-vehicle device. Alternatively, the network device may be a transmission reception point (transmission reception point, TRP). Alternatively, the network device may be a general term for all devices at a network end. For example, when a plurality of TRPs are used to transmit data to the terminal device, the plurality of TRPs are collectively referred to as a network device. The network device may use a central/distributed unit (Central Unit/Distributed Unit) split architecture, or may not use a CU-DU split architecture. This is not limited in this application.

In embodiments of this application, the terminal device is a device having a wireless transceiver function, and is also referred to as a user equipment (user equipment, UE), a mobile station (mobile station, MS), a mobile terminal (mobile terminal, MT), or the like. The terminal device is a device that provides a user with voice and/or data connectivity, and also includes a device that can perform sidelink communication, for example, an in-vehicle terminal, or a handheld terminal that can perform V2X communication. The terminal device may be deployed on land, including an indoor, outdoor, handheld, wearable, or in-vehicle device; or may be deployed on water (for example, on a ship); or may be deployed in the air (for example, on a plane, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, an XR device, or the like. An application scenario is not limited in embodiments of this application. The terminal device sometimes may also be referred to as a terminal, a user equipment (user equipment, UE), an access terminal device, an in-vehicle terminal, an industrial control terminal, a UE unit, a UE station, a mobile station, a remote station, a remote terminal device, a mobile device, a UE agent, a UE apparatus, or the like. The terminal device may also be fixed or mobile.

The network architecture and the service scenario described in this embodiment of this application are intended to describe technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The following describes embodiments of data transmission methods in this application by using an example. It should be noted that technical solutions (or referred to as embodiments) in this application may be independently implemented or may be implemented in combination based on some internal relationships. This is not limited in this application. **In** addition, various terms and definitions in the embodiments may be mutually referenced. **In** each embodiment of this application, different implementations may be implemented in combination or may be implemented independently.

FIG. 3 is a schematic flowchart of a data transmission method according to an embodiment of this application. FIG. 2 may be a diagram of a system architecture to which the data transmission method is applicable. As shown in FIG. 3, the method may include 201 to 203. An execution sequence of the steps is not limited in this embodiment of this application. As shown in the figure, the data transmission method in this embodiment of this application includes but is not limited to the following steps.

201: A terminal device determines, based on attribute information of an uplink transmission resource and resource mapping restriction information of a logical channel, a first logical channel for data transmission on the uplink transmission resource, and allocates, from the uplink transmission resource, a transmission resource to at least one logical channel in the first logical channel. The first logical channel includes one or more logical channels.

202: The terminal device determines a second logical channel when there is a remaining resource in the uplink transmission resource, and allocates the remaining resource to at least one logical channel in the second logical channel. The second logical channel includes one or more logical channels.

In this embodiment of this application, the uplink transmission resource may be a pre-configured resource or a dynamically scheduled resource. The attribute information of the uplink transmission resource may also be referred to as characteristic information of the uplink transmission resource. The attribute information of the uplink transmission resource may include but is not limited to at least one of the following: a subcarrier spacing index, physical uplink shared channel (Physical Uplink Shared CHannel, PUSCH) transmission duration, cell information, physical layer priority information, and the like.

The resource mapping restriction information of the logical channel may also be referred to as LCP restriction information, and the resource mapping restriction information of the logical channel indicates a condition that needs to be met by a resource to which data on the logical channel is mapped. For example, the resource mapping restriction information of the logical channel includes but is not limited to at least one of the following: an allowed subcarrier spacing (allowedSCS-List), a maximum PUSCH length (maxPUSCH-Duration), an allowed serving cell (allowedServingCells), and an allowed physical layer priority index value (allowedPHY-PriorityIndex). For descriptions of each parameter, refer to the descriptions in the foregoing embodiments, and details are not described herein again.

The terminal device determines, based on the attribute information of the uplink transmission resource and resource mapping restriction information of each logical channel, the first logical channel for data transmission on the uplink transmission resource, where the first logical channel includes the one or more logical channels. In other words, a channel in the first logical channel is selected based on the attribute information of the uplink transmission resource and the resource mapping restriction information of the logical channel.

Further, the terminal device allocates, from the uplink transmission resource, the transmission resource to the at least one logical channel in the first logical channel. If there is still a remaining resource after the transmission resource is allocated to the at least one logical channel in the first logical channel, the remaining resource is further allocated to the at least one logical channel in the second logical channel, where the second logical channel includes the one or more logical channels. It may be understood that the first logical channel is different from the second logical channel. In other words, the first logical channel does not have a same logical channel as the second logical channel.

In a possible implementation, the remaining resource may be a resource remaining after the terminal device allocates, from the uplink transmission resource, a transmission resource to at least one logical channel that is in the first logical channel and on which there is buffered data. The at least one logical channel may be a logical channel that is in the first logical channel and on which there is buffered data. For ease of description, in this application, a resource used for meeting data transmission on the at least one logical channel that is in the first logical channel and on which there is buffered data is referred to as a first resource, and the remaining resource may be understood as a resource other than the first resource in the uplink transmission resource.

For example, the terminal device may allocate a transmission resource to a logical channel in the first logical channel by using the LCP process shown in FIG. 1. After sub-steps a, b, and c in step 102 are performed, there is no data on each logical channel in the first logical channel, but the uplink transmission resource still remains. In this case, a resource remaining after allocation is referred to as a remaining resource. At a MAC layer of the terminal device, a resource size may be measured by using an amount of data whose transmission is performed. For example, the uplink transmission resource may be used for transmission of 200-byte data, and the first logical channel includes a logical channel 1, a logical channel 2, and a logical channel 3. There is data on the logical channel 1 and the logical channel 2, there is no data on the logical channel 3, there is 100-byte data on the logical channel 1, and there is 50-byte data on the logical channel 2. After the uplink transmission resource is allocated to the logical channel 1 and the logical channel 2, transmission of 50-byte data may be further performed. In this case, a resource that can be used for transmission of the 50-byte data is referred to as a remaining resource, and the remaining resource may be allocated to the at least one logical channel in the second logical channel.

In another possible implementation, the remaining resource may be a resource remaining after the terminal device allocates, from the uplink transmission resource, a PBR that meets a corresponding logical channel to the at least one logical channel in the first logical channel. For example, the at least one logical channel may be a logical channel that is in the first logical channel and that satisfies Bj>0. It may be understood as that the at least one logical channel may alternatively be a logical channel that is in the first logical channel and on which there is buffered data. This is not limited in this application. For ease of description, in this application, a resource used for meeting a prioritized bit rate PBR respectively corresponding to the at least one logical channel in the first logical channel is referred to as a second resource, and the remaining resource may be understood as a resource other than the second resource in the uplink transmission resource. For example, the terminal device may allocate a transmission resource to a logical channel in the first logical channel by using the LCP process shown in FIG. 1, and a resource remaining after sub-step a in step 102 is performed is referred to as a remaining resource. For example, the uplink transmission resource may be used for transmission of 200-byte data, and the first logical channel includes a logical channel 1, a logical channel 2, and a logical channel 3. Bj of the logical channel 1 and Bj of the logical channel 2 are greater than 0, a resource used for transmission of 50-byte data needs to be allocated to the logical channel 1 to meet a PBR of the logical channel 1, and a resource used for transmission of 30-byte data needs to be allocated to the logical channel to meet a PBR of the logical channel 2. After the uplink transmission resource is allocated to the logical channel 1 and the logical channel 2 to meet the PBRs of the corresponding logical channels, a remaining resource used for transmission of 120-byte data still remains, and the remaining resource may be allocated to the at least one logical channel in the second logical channel.

A logical channel included in the second logical channel is described below by using an example.

In an implementation, the second logical channel includes a logical channel other than the first logical channel in a plurality of logical channels of the terminal device. For example, a logical channel 1, a logical channel 2, a logical channel 3, a logical channel 4, a logical channel 5, and a logical channel 6 are configured for the terminal device, and the first logical channel selected based on the attribute information of the uplink transmission resource and the resource mapping restriction information of the logical channel includes the logical channel 1, the logical channel 2, and the logical channel 3. In this case, the second logical channel may include the logical channel 4, the logical channel 5, and the logical channel 6.

In another implementation, the second logical channel may include a logical channel associated with a logical channel in the first logical channel. The logical channel associated with the logical channel in the first logical channel may include at least one of the following: a logical channel that belongs to a same data radio bearer (Data Radio Bearer, DRB) as the logical channel in the first logical channel; a logical channel that belongs to a same protocol data unit (Protocol Data Unit, PDU) session as the logical channel in the first logical channel; and a pre-configured logical channel on which resource sharing is allowed to be performed with the logical channel in the first logical channel.

That the second logical channel includes the logical channel that belongs to the same DRB as the logical channel in the first logical channel is described below by using an example. For example, a logical channel 1, a logical channel 2, a logical channel 3, a logical channel 4, a logical channel 5, and a logical channel 6 are configured for the terminal device, the logical channel 1 and the logical channel 4 belong to a same DRB, and the logical channel 2, the logical channel 5, and the logical channel 6 belong to a same DRB. The first logical channel selected based on the attribute information of the uplink transmission resource and the resource mapping restriction information of the logical channel includes the logical channel 1, the logical channel 2, and the logical channel 3. In this case, the second logical channel includes the logical channel 4, the logical channel 5, and the logical channel 6.

That the second logical channel includes the logical channel that belongs to the same PDU session as the logical channel in the first logical channel is described below by using an example. For example, a logical channel 1, a logical channel 2, a logical channel 3, a logical channel 4, a logical channel 5, and a logical channel 6 are configured for the terminal device, a DRB associated with the logical channel 1 and a DRB associated with the logical channel 4 belong to a same PDU session A, a DRB associated with the logical channel 2 and a DRB associated with the logical channel 5 belong to a same PDU session B, and a DRB associated with the logical channel 3 and a DRB associated with the logical channel 6 belong to a same PDU session C. The first logical channel selected based on the attribute information of the uplink transmission resource and the resource mapping restriction information of the logical channel includes the logical channel 1 and the logical channel 2. In this case, the second logical channel includes the logical channel 4 and the logical channel 5.

That the second logical channel includes the pre-configured logical channel on which resource sharing is performed with the logical channel in the first logical channel is described below by using an example. For example, a logical channel 1, a logical channel 2, a logical channel 3, a logical channel 4, a logical channel 5, and a logical channel 6 are configured for the terminal device, and a network device configures that all logical channels on which resource sharing is allowed to be performed with the logical channel 1, the logical channel 2, and the logical channel 3 are the logical channel 4. The first logical channel selected based on the attribute information of the uplink transmission resource and the resource mapping restriction information of the logical channel includes the logical channel 1, the logical channel 2, and the logical channel 3. In this case, the second logical channel includes the logical channel 4. It may be understood that logical channels on which sharing is allowed to be performed with different logical channels may also be different. For example, a logical channel on which resource sharing is allowed to be performed with the logical channel 1 is the logical channel 4, a logical channel on which resource sharing is allowed to be performed with the logical channel 2 is the logical channel 5, and a logical channel on which resource sharing is performed with the logical channel 3 is not configured. In this case, the second logical channel may include the logical channel 4 and the logical channel 5.

In still another implementation, the second logical channel may include a logical channel that is indicated by a network device and on which sharing of the remaining resource is allowed. For example, a logical channel 1, a logical channel 2, a logical channel 3, a logical channel 4, a logical channel 5, and a logical channel 6 are configured for the terminal device, and when the network device grants to indicate the uplink transmission resource, the network device indicates that the logical channel on which sharing of the remaining resource is allowed includes the logical channel 4. The first logical channel selected based on the attribute information of the uplink transmission resource and the resource mapping restriction information of the logical channel includes the logical channel 1, the logical channel 2, and the logical channel 3. In this case, the second logical channel includes the logical channel 4.

After determining the second logical channel, the terminal device may allocate the remaining resource to the at least one logical channel in the second logical channel. In an example, the terminal device may allocate, based on an order of priorities of logical channels in the second logical channel, a transmission resource to at least one logical channel that is in the second logical channel and on which there is buffered data, until there is no data on the logical channels or all remaining resources are allocated. For example, the second logical channel includes the logical channel 4, the logical channel 5, and the logical channel 6. A priority of the logical channel 4 is higher than a priority of the logical channel 5, and the priority of the logical channel 5 is higher than a priority of the logical channel 6. The remaining resource may be used for transmission of 100-byte data. There is 50-byte data on the logical channel 4, there is 50-byte data on the logical channel 5, and there is 40-byte data on the logical channel 6. Based on an order of the priorities, the remaining resource is preferentially allocated to a logical channel with a high priority, that is, the remaining resource is allocated to the logical channel 4, and then is allocated to the logical channel 5 with a second highest priority after transmission of data buffered on the logical channel 4 is met. Because there is no remaining resource after the resource is allocated to the logical channel 5, no resource is allocated to the logical channel 6. In another example, the remaining resource may be allocated to the at least one logical channel in the second logical channel in the resource allocation manner in the LCP process. For details, refer to the descriptions of step 102 in the embodiment in FIG. 1. The details are not described herein again.

In some embodiments, the terminal device allocates the remaining resource to the at least one logical channel in the second logical channel only when there is a remaining resource in the uplink transmission resource and a maximum amount of data allowed to be transmitted on the remaining resource is greater than or equal to a data amount threshold, to avoid an increase in complexity caused by resource allocation performed when the maximum amount of data that can be transmitted on the remaining resource is small. For example, the data amount threshold may be configured by the network device for the terminal device by using RRC signaling, or the data amount threshold may be pre-configured in the terminal device.

203: The terminal device transmits, on the uplink transmission resource, data on the at least one logical channel in the first logical channel and data on the at least one logical channel in the second logical channel.

After allocating the uplink transmission resource to the at least one logical channel in the first logical channel and the at least one logical channel in the second logical channel, the terminal device may transmit, on the uplink transmission resource, the data on the at least one logical channel in the first logical channel and the data on the at least one logical channel in the second logical channel. Specifically, optionally, a MAC layer entity of the terminal device multiplexes the at least one logical channel in the first logical channel and the at least one logical channel in the second logical channel onto a transmission channel, generates a MAC PDU, and submits the MAC PDU to a physical layer PHY entity for transmission on the indicated uplink transmission resource.

It may be understood that, if the maximum amount of data that is allowed to be transmitted on the remaining resource in the uplink transmission resource is less than the data amount threshold, only transmission of the data on the at least one logical channel in the first logical channel is performed on the uplink transmission resource.

It may be understood that data on a logical channel in the first logical channel and data on a logical channel in the second logical channel in this application may be XR service data. In some embodiments, if data on each logical channel in the first logical channel and data on each logical channel in the second logical channel are AR service data in the XR service data, the data on the logical channel in the first logical channel may be data in an I-frame data stream having a higher requirement, and the data on the logical channel in the second logical channel may be data in a P-frame data stream having a second lowest requirement. It may be understood that this application may also be applied to an ultra-reliable low-latency (Ultra-Reliable Low-Latency Communication, URLLC) service scenario and an enhanced mobile broadband (Enhanced Mobile Broadband, eMBB) service scenario. For example, the data on the first logical channel may be URLLC service data, and the data on the second logical channel may be eMBB data. To be specific, a transmission resource used for transmission of high-requirement data may be shared with service data having a low transmission requirement, so that the resource is fully utilized, and a transmission quality requirement of the service data is not affected.

In this embodiment of this application, the terminal device determines, based on the attribute information of the uplink transmission resource and the resource mapping restriction information of the logical channel, the first logical channel for data transmission on the uplink transmission resource, and allocates, from the uplink transmission resource, a transmission resource to the at least one logical channel in the first logical channel. When there is a remaining resource, the remaining resource may be allocated to the at least one logical channel in the second logical channel, so that the uplink transmission resource is fully utilized, thereby improving resource utilization of the uplink transmission resource and reducing a waste of resources.

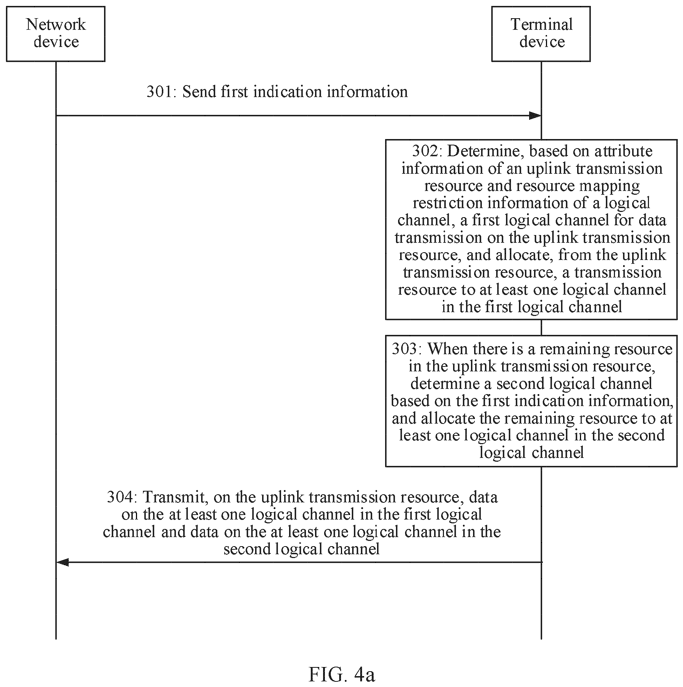

FIG. 4a is a schematic flowchart of another data transmission method according to an embodiment of this application. FIG. 2 may be a diagram of a system architecture to which the data transmission method is applicable. As shown in FIG. 4a, the method may include 301 to 304. An execution sequence of the steps is not limited in this embodiment of this application. As shown in the figure, the data transmission method in this embodiment of this application includes but is not limited to the following steps.

301: A network device sends first indication information to a terminal device. Correspondingly, the terminal device receives the first indication information.

The first indication information indicates that when there is a remaining resource in an uplink transmission resource, sharing of the remaining resource is allowed, and/or the first indication information indicates a second logical channel on which sharing of a remaining resource in an uplink transmission resource is allowed. It may be understood that the second logical channel includes one or more logical channels.

In a possible implementation, if the first indication information indicates that when there is a remaining resource in the uplink transmission resource, sharing of the remaining resource is allowed, the first indication information may include bit indication information, and when the bit indication information is a first state value, the bit indication information indicates that when there is a remaining resource in the uplink transmission resource, sharing of the remaining resource is allowed. For example, the bit indication information occupies one bit, and the first state value may be 1. It may be understood that the first state value may alternatively be another value. This is not limited in this application.

For example, the bit indication information is a 1-bit indicator value. When a value of the bit is '1' or 'true', it indicates that when there is a remaining resource in the uplink transmission resource, sharing of the remaining resource is allowed, that is, the remaining resource may be allocated to at least one logical channel in the second logical channel. A logical channel included in the second logical channel may be a logical channel other than a logical channel in a first logical channel in a plurality of logical channels configured by the terminal device, may include a logical channel associated with a logical channel in a first logical channel, may include a logical channel that is indicated by the network device and on which sharing of the remaining resource is allowed, or the like. For details, refer to the descriptions in the foregoing embodiment. The details are not described herein again.

In a possible implementation, if the first indication information indicates the second logical channel on which sharing of the remaining resource in the uplink transmission resource is allowed, the first indication information may include a first identifier, where the first identifier indicates a logical channel in the second logical channel. It may be understood that the first identifier may also be referred to as an index value, or may also be referred to as a set identifier. The name is not limited in this application. The first identifier may occupy x bits, and a value of x is an integer greater than or equal to 1. It may be understood that, in this implementation, the second logical channel includes a logical channel indicated by the first indication information.

For example, the first indication information includes an x-bit index value. One index value corresponds to one logical channel set. The network device pre-configures a correspondence between an index value and a logical channel set. As shown in Table 1, the network device configures correspondences between three index values and three logical channel sets. For example, when the first indication information indicates an index value 1, the second logical channel indicated by the first indication information includes a logical channel 3. When the first indication information indicates an index value 2, the second logical channel indicated by the first indication information includes a logical channel 4 and a logical channel 5.

**Table 1**

| x-bit index value | LCID set |
|---|---|
| 0 | Logical channel 1 and logical channel 2 |
| 1 | Logical channel 3 |
| 2 | Logical channel 4 and logical channel 5 |

In a possible implementation, if the first indication information indicates the second logical channel on which sharing of the remaining resource in the uplink transmission resource is allowed, the first indication information may include an identifier of each logical channel in the second logical channel. It may be understood that, in this implementation, the second logical channel includes a logical channel indicated by the first indication information.

It may be understood that the first indication information may separately indicate that when there is a remaining resource in the uplink transmission resource, sharing of the remaining resource is allowed, but does not indicate the second logical channel on which sharing of the remaining resource is allowed. The second logical channel may be obtained in a default manner, that is, the first indication information includes only the bit indication information. Alternatively, the first indication information may separately indicate the second logical channel on which sharing of the remaining resource is allowed, that is, the second indication information includes only the first identifier or the identifier of the logical channel in the second logical channel. Alternatively, the first indication information may not only include the bit indication information, but also include the first identifier or the identifier of the logical channel in the second logical channel. This is not limited in this application.

A manner of carrying the first indication information is described below by using an example.

For example, the first indication information may be carried in downlink control information (Downlink Control Information, DCI) for scheduling the uplink transmission resource. For example, the first indication information is carried by using a reserved bit in existing uplink scheduling DCI, or the first indication information may be carried by reusing an existing field or some bits of the field. In this way, the first indication information is carried in the DCI, to more flexibly indicate whether sharing of the remaining resource in the uplink transmission resource is allowed, and/or a logical channel on which sharing of the remaining resource is performed.

For example, when the uplink transmission resource belongs to a resource of a configured grant (Configured Grant, CG), the first indication information may be carried in activation DCI of the configured grant. For example, the first indication information is carried by using a reserved bit in the activation DCI of the existing CG, or the first indication information may be carried by reusing an existing field or some bits of the field, for example, an existing HARQ process number field or some bits of the HARQ process number field may be reused.

For example, the first indication information may be carried in a configuration information element of the CG to which the uplink transmission resource belongs.

An example is used below for description: An identifier of a logical channel in the second logical channel is carried in the configuration information element of the CG to which the uplink transmission resource belongs. For example, additionalLCHs is added to the ConfiguredGrantConfig information element, and additionalLCHs indicates an identifier of a logical channel on which sharing of the remaining resource in the uplink transmission resource of the configured grant CG is allowed.

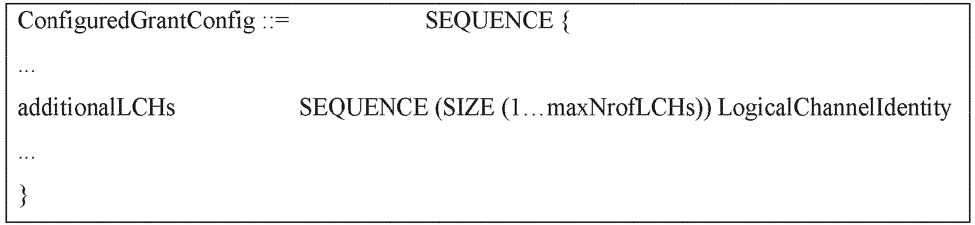

For example, the first indication information may be carried in a configuration information element of a bandwidth part (Band Width Part, BWP) to which the uplink transmission resource belongs. The BWP to which the uplink transmission resource belongs may be understood as that the uplink transmission resource is a resource allocated in the BWP. It may be understood that if the first indication information is carried in the configuration information element of the BWP, the first indication information may indicate that sharing of a remaining resource in a configured grant configured grant resource and/or a dynamically scheduled resource in the BWP is allowed, and/or indicate a logical channel on which sharing of a remaining resource in a configured grant configured grant resource and/or a dynamically scheduled resource in the BWP is allowed.

For example, the first indication information may be carried in a configuration information element of a cell to which the uplink transmission resource belongs. The cell to which the uplink transmission resource belongs may be understood as that the uplink transmission resource is a resource allocated in the cell. It may be understood that if the first indication information is carried in the configuration information element of the cell, the first indication information may indicate that sharing of a remaining resource in a configured grant configured grant resource and/or a dynamically scheduled resource in the cell is allowed, and/or indicate a logical channel on which sharing of a remaining resource in a configured grant configured grant resource and/or a dynamically scheduled resource in the cell is allowed.

For example, the first indication information may be carried in a configuration information element of a cell group to which the uplink transmission resource belongs. The cell group to which the uplink transmission resource belongs may be understood as that the uplink transmission resource is a resource allocated in the cell group. It may be understood that if the first indication information is carried in the configuration information element of the cell group, the first indication information may indicate that sharing of a remaining resource in a configured grant configured grant resource and/or a dynamically scheduled resource in the cell group is allowed, and/or indicate a logical channel on which sharing of a remaining resource in a configured grant configured grant resource and/or a dynamically scheduled resource in the cell group is allowed.

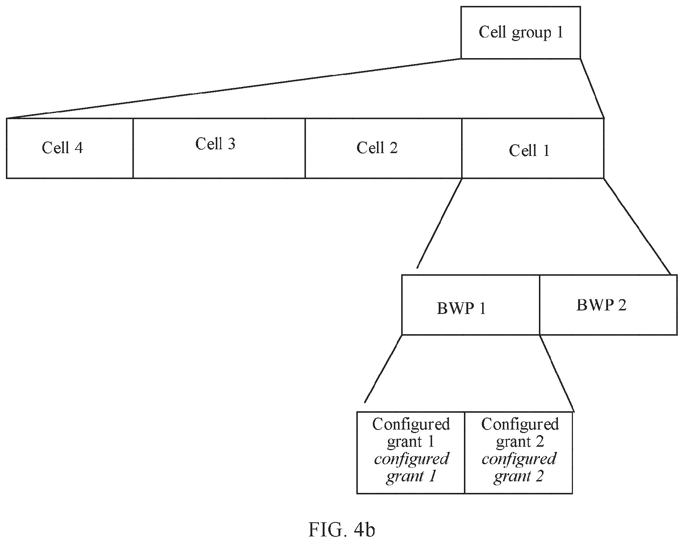

FIG. 4b shows an example of a structure of a configuration information element of a bandwidth part BWP/cell serving cell/configuration information element of a cell group cell group/configured grant configured grant according to an embodiment of this application. It may be understood that this is merely an example, and does not constitute a limitation on this application. As shown in FIG. 4b, the configuration information element of the cell group may include a configuration information element of at least one cell, and a configuration information element of one cell may include a configuration information element of at least one BWP. A configuration information element of one BWP may include a configuration information element of at least one configured grant configured grant. The first indication information in this application may be carried in at least one of the following: the configuration information element of the configured grant, the configuration information element of the bandwidth part BWP, the configuration information element of the cell serving cell, or the configuration information element of the cell group cell group.

In comparison with carrying the first indication information by the DCI, when the first indication information is carried in a configuration information element of configuration signaling, sharing of a remaining resource is implemented only by carrying the first indication information by the configuration signaling in one radio resource control (Radio Resource Control, RRC) configuration process. This avoids signaling overheads caused by carrying an additional field by each piece of DCI.

302: The terminal device determines, based on attribute information of an uplink transmission resource and resource mapping restriction information of a logical channel, a first logical channel for data transmission on the uplink transmission resource, and allocates, from the uplink transmission resource, a transmission resource to at least one logical channel in the first logical channel.

For step 302 in this embodiment, refer to the descriptions of step 201 in the embodiment in FIG. 3, and details are not described herein again.

303: When there is a remaining resource in the uplink transmission resource, the terminal device determines a second logical channel based on the first indication information, and allocates the remaining resource to at least one logical channel in the second logical channel.

If the first indication information indicates that when there is a remaining resource in the uplink transmission resource, sharing of the remaining resource is allowed, that the terminal device determines the second logical channel based on the first indication information may be understood as: When receiving the first indication information, the terminal device shares the remaining resource with a logical channel in the second logical channel. If the terminal device does not receive the first indication information, the terminal device performs padding padding on the remaining resource.

If the first indication information indicates the second logical channel on which sharing of the remaining resource in the uplink transmission resource is allowed, that the terminal device determines the second logical channel based on the first indication information may be understood as: The terminal device uses a channel indicated by the first indication information as the second logical channel.

304: The terminal device transmits, on the uplink transmission resource, data on the at least one logical channel in the first logical channel and data on the at least one logical channel in the second logical channel. Correspondingly, the network device receives the data on the at least one logical channel in the first logical channel and the data on the at least one logical channel in the second logical channel.

For step 304 in this embodiment, refer to the descriptions of step 203 in the embodiment in FIG. 3, and details are not described herein again.

Optionally, in this embodiment, the terminal device performs step 303, that is, allocates the remaining resource to the at least one logical channel in the second logical channel, only when there is a remaining resource in the uplink transmission resource and a maximum amount of data allowed to be transmitted on the remaining resource is greater than or equal to a data amount threshold, to avoid an increase in complexity caused by resource allocation performed when the maximum amount of data that can be transmitted on the remaining resource is small. For example, the data amount threshold may be configured by the network device for the terminal device by using RRC signaling, or the data amount threshold may be pre-configured in the terminal device. If the maximum amount of data that can be allowed to be transmitted on the remaining resource in the uplink transmission resource is less than the data amount threshold, in step 304, only transmission of the data on the at least one logical channel in the first logical channel is performed by the terminal device on the uplink transmission resource.

In this embodiment of this application, the network device indicates sharing of the remaining resource at a granularity of a resource. The terminal device may determine, based on the first indication information, whether to share the remaining resource in the uplink transmission resource. In some implementations, the terminal device may further determine a logical channel with which the remaining resource is shared, to avoid a waste of resources.

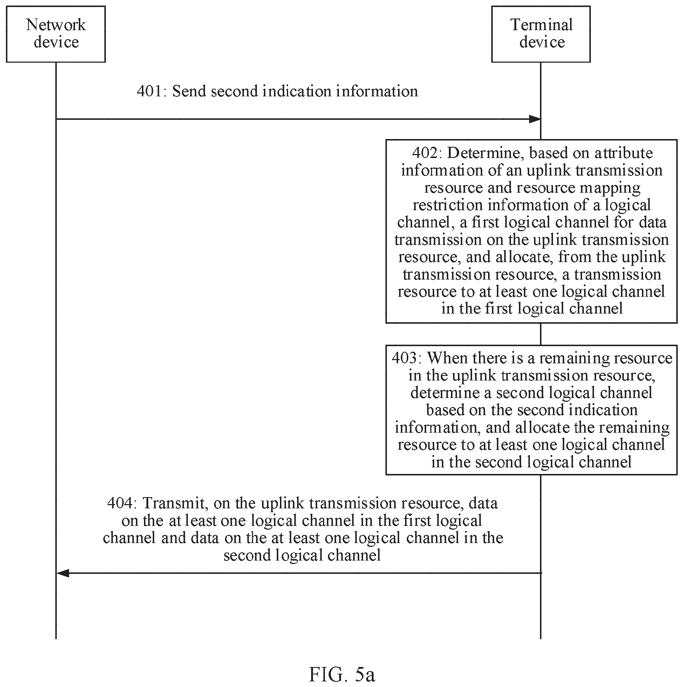

FIG. 5a is a schematic flowchart of still another data transmission method according to an embodiment of this application. FIG. 2 may be a diagram of a system architecture to which the data transmission method is applicable. As shown in FIG. 5a, the method may include 401 to 404. An execution sequence of the steps is not limited in this embodiment of this application. As shown in the figure, the data transmission method in this embodiment of this application includes but is not limited to the following steps.

401: A network device sends second indication information. Correspondingly, a terminal device receives the second indication information.

The second indication information indicates that resource sharing is allowed on one or more logical channels in a first logical channel, and/or the second indication information indicates a logical channel on which resource sharing is allowed to be performed with one or more logical channels in a first logical channel.

In a possible implementation, the second indication information includes sharing information respectively corresponding to the one or more logical channels in the first logical channel, and the sharing information indicates that resource sharing is allowed on a corresponding logical channel, or the sharing information indicates a logical channel on which resource sharing is allowed to be performed with a corresponding logical channel.

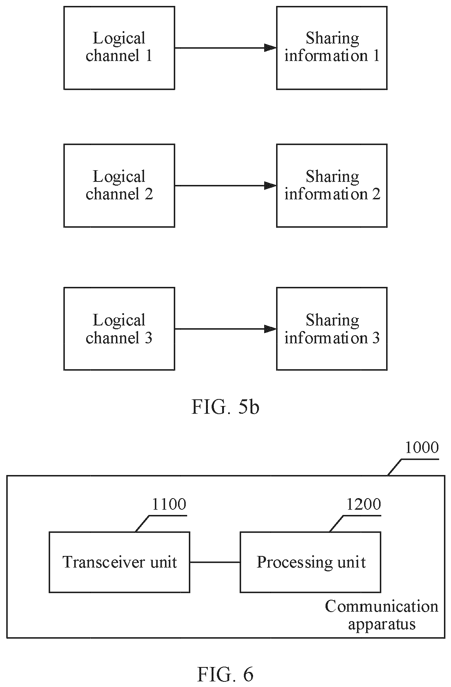

A correspondence between a logical channel and sharing information is described below by using an example with reference to FIG. 5b. As shown in FIG. 4b, if the first logical channel includes a logical channel 1, a logical channel 2, and a logical channel 3, the logical channel 1 corresponds to sharing information 1, the logical channel 2 corresponds to sharing information 2, and the logical channel 3 corresponds to sharing information 3. For example, the sharing information 1 indicates whether resource sharing is allowed on the corresponding logical channel 1, or indicates a logical channel on which resource sharing is allowed to be performed with the corresponding logical channel 1. The network device may configure sharing information corresponding to each logical channel.

In a possible implementation, if sharing information indicates whether resource sharing is allowed on a corresponding logical channel, the sharing information may include bit indication information, and when the bit indication information is a second state value, the bit indication information indicates that resource sharing is allowed on a corresponding logical channel. For example, the bit indication information includes a 1-bit indicator value, and the second state value may be '1' or 'true'. It may be understood that the second state value may alternatively be another value. This is not limited in this application.

In an example, the terminal device may share a remaining resource in the uplink transmission resource with a logical channel in a second logical channel only when sharing information respectively corresponding to all logical channels in the first logical channel indicates that resource sharing is allowed. For example, if the second indication information includes a 1-bit indicator value, that is, 1-bit indicator values respectively corresponding to all the logical channels in the first logical channel are all '1' or 'true', the remaining resource is shared with a logical channel in the second logical channel.

In another example, the terminal device may share a remaining resource in the uplink transmission resource with a logical channel in the second logical channel when sharing information corresponding to a logical channel in the first logical channel indicates that resource sharing is allowed. In this manner, a quantity of logical channels on which resource sharing is allowed may not be limited.

In this implementation, a logical channel included in the second logical channel may be a logical channel other than a logical channel in a first logical channel in a plurality of logical channels configured by the terminal device, may include a logical channel associated with a logical channel in a first logical channel, may include a logical channel that is indicated by the network device and on which sharing of the remaining resource is allowed, or the like. For details, refer to the descriptions in the foregoing embodiment. The details are not described herein again.

In a possible implementation, if sharing information indicates a logical channel on which resource sharing is allowed to be performed with a corresponding logical channel, the sharing information may include a second identifier, and the second identifier indicates a logical channel on which resource sharing is allowed to be performed with a corresponding logical channel. It may be understood that the second identifier may also be referred to as an index value, or may also be referred to as a set identifier. The name is not limited in this application. The first identifier may occupy y bits, and a value of y is an integer greater than or equal to 1. It may be understood that, in this implementation, the second logical channel includes a logical channel that is indicated by sharing information and on which resource sharing is allowed.

For example, the sharing information includes a y-bit index value. One index value may correspond to one logical channel set. The network device pre-configures a correspondence between an index value and a logical channel set. As shown in Table 2, the network device configures correspondences between three index values and three logical channel sets. For example, when the sharing information 1 of the logical channel 1 indicates an index value 1, it indicates that resource sharing may be performed between the logical channel 1 and a logical channel 5. Similarly, when the sharing information of the logical channel 2 indicates an index value 2, it indicates that resource sharing may be performed between the logical channel 2 and a logical channel 6 and a logical channel 7. In this implementation, the second logical channel may include a logical channel indicated by sharing information respectively corresponding to one or more logical channels that are in the first logical channel and for which the sharing information is configured. For example, when the first logical channel includes the logical channel 1 and the logical channel 2, the sharing information 1 of the logical channel 1 indicates the index value 1, and the sharing information of the logical channel 2 indicates the index value 2. In this case, the second logical channel includes the logical channel 5, the logical channel 6, and the logical channel 7.

**Table 2**

| x-bit index value | LCID set |
|---|---|
| 0 | Logical channel 3 and logical channel 4 |
| 1 | Logical channel 5 |
| 2 | Logical channel 6 and logical channel 7 |

In some embodiments, another implementation in which one index value corresponds to one logical channel set may be as follows: A same index value may be configured for a plurality of logical channels belonging to a same set, and that sharing information of a logical channel includes an index value of the logical channel may indicate a logical channel in a set corresponding to the index value. For example, the logical channel 1, the logical channel 2, the logical channel 3, the logical channel 4, the logical channel 5, the logical channel 6, and the logical channel 7 are configured for the terminal device. As shown in Table 3, an index value 0 is configured for the logical channel 1, the logical channel 3, and the logical channel 4, an index value 1 is configured for the logical channel 2 and the logical channel 5, an index value 2 is configured for the logical channel 3 and the logical channel 6, and no index value is configured for the logical channel 7. If the first logical channel includes the logical channel 1, the logical channel 2, and the logical channel 7, the sharing information 1 of the logical channel 1 includes the index value 0 of the logical channel 1, and the sharing information 2 of the logical channel 2 includes the index value 1 of the logical channel 2. Because no index value is configured for the logical channel 7, sharing information 7 of the logical channel 7 does not include an index value. Because the same index value 0 is configured for the logical channel 1, the logical channel 3, and the logical channel 4, and the same index value 1 is configured for the logical channel 2 and the logical channel 5, the logical channel 3 and the logical channel 4 that have the same index value as the logical channel 1, and the logical channel 5 that has the same index value as the logical channel 2 form the second logical channel. In other words, the second logical channel includes the logical channel 3, the logical channel 4, and the logical channel 5.

**Table 3**

| x-bit index value | LCID set |
|---|---|
| 0 | Logical channel 1, logical channel 3, and logical channel 4 |
| 1 | Logical channel 2 and logical channel 5 |
| 2 | Logical channel 3 and logical channel 6 |

**In** a possible implementation, if sharing information indicates a logical channel on which resource sharing is allowed to be performed with a corresponding logical channel, the sharing information may include an identifier of the logical channel on which resource sharing is allowed to be performed with the corresponding logical channel. It may be understood that, in this implementation, the second logical channel includes a logical channel that is indicated by sharing information and on which resource sharing is allowed.

A manner of carrying sharing information that corresponds to each logical channel and that is in the second indication information is described below by using an example.

For example, the second indication information may be carried in a configuration information element of a logical channel, that is, the network device configures sharing information of the logical channel in the configuration information element of the logical channel. For a specific implementation of the sharing information, refer to the descriptions in the foregoing embodiment. Details are not described herein again. For example, if an identifier of a logical channel on which resource sharing is allowed to be performed with the logical channel is configured in the configuration information element of the logical channel, additionalLCHs may be added to the configuration information element of the logical channel, where additionalLCHs includes an identifier of a logical channel on which resource sharing is allowed to be performed with the logical channel. For related descriptions of added additionalLCHs, refer to the descriptions in the foregoing embodiment. Details are not described herein again.

402: The terminal device determines, based on attribute information of an uplink transmission resource and resource mapping restriction information of a logical channel, a first logical channel for data transmission on the uplink transmission resource, and allocates, from the uplink transmission resource, a transmission resource to at least one logical channel in the first logical channel.

For step 402 in this embodiment, refer to the descriptions of step 201 in the embodiment in FIG. 3, and details are not described herein again.

403: When there is a remaining resource in the uplink transmission resource, the terminal device determines a second logical channel based on the second indication information, and allocates the remaining resource to at least one logical channel in the second logical channel.

The second indication information indicates that resource sharing is allowed on the one or more logical channels in the first logical channel, and/or the second indication information indicates the logical channel on which resource sharing is allowed to be performed with the one or more logical channels in the first logical channel.

If the second indication information indicates that resource sharing is allowed on the one or more logical channels in the first logical channel, that the terminal device determines the second logical channel based on the second indication information may be understood as: The remaining resource is shared with a logical channel in the second logical channel only when resource sharing is allowed on all logical channels in the first logical channel, or the remaining resource is shared with a logical channel in the second logical channel when there is a logical channel that is in the first logical channel and on which resource sharing is allowed.

If the second indication information indicates the logical channel on which resource sharing is allowed to be performed with one or more logical channels in the first logical channel, that the terminal device determines the second logical channel based on the second indication information may be understood as: The terminal device uses a channel indicated by the second indication information as the second logical channel.

404: The terminal device transmits, on the uplink transmission resource, data on the at least one logical channel in the first logical channel and data on the at least one logical channel in the second logical channel. Correspondingly, the network device receives the data on the at least one logical channel in the first logical channel and the data on the at least one logical channel in the second logical channel.

For step 404 in this embodiment, refer to the descriptions of step 203 in the embodiment in FIG. 3, and details are not described herein again.

Optionally, in this embodiment, the terminal device performs step 403, that is, allocates the remaining resource to the at least one logical channel in the second logical channel, only when there is a remaining resource in the uplink transmission resource and a maximum amount of data allowed to be transmitted on the remaining resource is greater than or equal to a data amount threshold, to avoid an increase in complexity caused by resource allocation performed when the maximum amount of data that can be transmitted on the remaining resource is small. For example, the data amount threshold may be configured by the network device for the terminal device by using RRC signaling, or the data amount threshold may be pre-configured in the terminal device. If the maximum amount of data that can be allowed to be transmitted on the remaining resource in the uplink transmission resource is less than the data amount threshold, in step 404, only transmission of the data on the at least one logical channel in the first logical channel is performed by the terminal device on the uplink transmission resource.

In this embodiment of this application, a granularity of a logical channel is used to indicate whether resource sharing is allowed and/or indicate a channel on which resource sharing is allowed. In this implementation, the uplink transmission resource can be further allocated to another logical channel only when a resource is allocated to a specific logical channel and there is a remaining resource. This has a more flexible granularity of control.

A communication apparatus provided in an embodiment of this application is described below.

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. Communication apparatuses in embodiments of this application are described below in detail with reference to FIG. 6 to FIG. 8.

FIG. 6 is a diagram of a structure of a communication apparatus according to an embodiment of this application. As shown in FIG. 6, the communication apparatus 1000 may correspondingly implement a function or step implemented by the communication apparatus (for example, the terminal device or the network device) in the foregoing method embodiments. The communication apparatus may include a processing unit 1200 and a transceiver unit 1100. Optionally, the communication apparatus may further include a storage unit. The storage unit may be configured to store instructions (code or a program) and/or data. The processing unit 1200 and the transceiver unit 1100 may be coupled to the storage unit. For example, the processing unit 1200 may read the instructions (the code or the program) and/or the data in the storage unit, to implement a corresponding method. The foregoing units may be disposed independently, or may be partially or completely integrated. For example, the transceiver unit 1100 may include a sending unit and a receiving unit. The sending unit may be a transmitter machine, and the receiving unit may be a receiver machine. An entity corresponding to the transceiver unit 1100 may be a transceiver.

In some possible implementations, the communication apparatus 1000 can correspondingly implement behavior and a function of the terminal device in the foregoing method embodiments. For example, the communication apparatus 1000 may be a terminal device, or may be a component (for example, a chip or a circuit) used in the terminal device. For example, the transceiver unit 1100 may be configured to perform all receiving or sending operations performed by the terminal device in the embodiments in FIG. 3, FIG. 4a and FIG. 5a, for example, step 203 in FIG. 3, step 301 and step 304 in the embodiment in FIG. 4a, step 401 and step 404 in the embodiment in FIG. 5a, and/or another process used to support the technology described in this specification. The processing unit 1200 is configured to perform all operations, other than the receiving and sending operations, performed by the terminal device in the embodiments in FIG. 3, FIG. 4a, and FIG. 5a, for example, step 201 and step 202 in the embodiment in FIG. 3, step 302 and step 303 in the embodiment in FIG. 4a, and step 402 and step 403 in the embodiment in FIG. 5a.

In a possible design, the communication apparatus 1000 includes a processing unit 1200 and a transceiver unit 1100.

The processing unit 1200 is configured to determine, based on attribute information of an uplink transmission resource and resource mapping restriction information of a logical channel, a first logical channel for data transmission on the uplink transmission resource, where the first logical channel includes one or more logical channels, and allocate, from the uplink transmission resource, a transmission resource to at least one logical channel in the first logical channel, where
the processing unit 1200 is further configured to determine a second logical channel when there is a remaining resource in the uplink transmission resource, where the second logical channel includes one or more logical channels, and allocate the remaining resource to at least one logical channel in the second logical channel.

The transceiver unit 1100 is configured to transmit, on the uplink transmission resource, data on the at least one piece of logic in the first logical channel and data on the at least one logical channel in the second logical channel.

For example, the second logical channel includes a logical channel other than the first logical channel in a plurality of logical channels of the terminal device; or
the second logical channel includes a logical channel associated with a logical channel in the first logical channel; or
the second logical channel includes an indicated logical channel on which sharing of the remaining resource is allowed.

For example, the logical channel associated with the logical channel in the first logical channel includes at least one of the following:
a logical channel that belongs to a same data radio bearer DRB as the logical channel in the first logical channel;
a logical channel that belongs to a same protocol data unit PDU session as the logical channel in the first logical channel; and
a pre-configured logical channel on which resource sharing is allowed to be performed with the logical channel in the first logical channel.

For example, the processing unit 1200 is specifically configured to determine, by the terminal device, the second logical channel when there is a remaining resource in the uplink transmission resource, and a maximum amount of data allowed to be transmitted on the remaining resource is greater than or equal to a data amount threshold.

For example, the transceiver unit 1100 is further configured to receive first indication information from a network device, where the first indication information indicates that when there is a remaining resource in the uplink transmission resource, sharing of the remaining resource is allowed, and/or the first indication information indicates the second logical channel on which sharing of the remaining resource is allowed.

The processing unit 1200 is specifically configured to determine the second logical channel based on the first indication information.

For example, the first indication information includes bit indication information, and when the bit indication information is a first state value, the bit indication information indicates that when there is a remaining resource in the uplink transmission resource, sharing of the remaining resource is allowed.

For example, the first indication information includes a first identifier or includes an identifier of a logical channel in the second logical channel, and the first identifier indicates a logical channel in the second logical channel.

For example, the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

For example, the transceiver unit 1100 is further configured to receive second indication information from a network device, where the second indication information indicates that resource sharing is allowed on the one or more logical channels in the first logical channel, and/or the second indication information indicates a logical channel on which resource sharing is allowed to be performed with the one or more logical channels in the first logical channel.

The processing unit 1200 is specifically configured to determine the second logical channel based on the second indication information.

For example, the second indication information includes sharing information respectively corresponding to the one or more logical channels in the first logical channel, and the sharing information indicates that resource sharing is allowed on a corresponding logical channel.

For example, the processing unit 1200 is specifically configured to determine the second logical channel when sharing information respectively corresponding to all logical channels in the first logical channel indicates that resource sharing is allowed.

For example, the sharing information includes bit indication information, and when the bit indication information is a second state value, the bit indication information indicates that resource sharing is allowed on a corresponding logical channel.

For example, the second indication information includes sharing information respectively corresponding to the one or more logical channels in the first logical channel, and the sharing information indicates a logical channel on which resource sharing is allowed to be performed with a corresponding logical channel.

For example, the sharing information includes a second identifier or an identifier of the logical channel on which resource sharing is allowed to be performed with the corresponding logical channel, and the second identifier indicates the logical channel on which resource sharing is allowed to be performed with the corresponding logical channel.

For example, the second indication information is carried in a configuration information element for configuring a logical channel.

For example, the remaining resource includes a resource other than a first resource in the uplink transmission resource, or a resource other than a second resource in the uplink transmission resource; and
the first resource is used to satisfy transmission of data buffered on the at least one logical channel in the first logical channel, and the second resource is used to satisfy a prioritized bit rate PBR respectively corresponding to the at least one logical channel in the first logical channel.

In some possible implementations, the communication apparatus 1000 can correspondingly implement behavior and a function of the network device in the foregoing method embodiments. For example, the communication apparatus 1000 may be a network device, or may be a component (for example, a chip or a circuit) used in the network device. For example, the transceiver unit 1100 may be configured to perform all receiving or sending operations performed by the network device in the embodiments in FIG. 4a and FIG. 5a, for example, step 301 and step 304 in the embodiment in FIG. 4a, step 401 and step 404 in the embodiment in FIG. 5a, and/or another process used to support the technology described in this specification. The processing unit 1200 is configured to perform all operations, other than the receiving or sending operations, performed by the network device in the embodiments in FIG. 4a and FIG. 5a.

In another possible design, the communication apparatus 1000 includes a processing unit 1200 and a transceiver unit 1100.

The transceiver unit 1100 is configured to send first indication information to a terminal device, where the first indication information indicates that when there is a remaining resource in an uplink transmission resource, sharing of the remaining resource is allowed, and/or the first indication information indicates a second logical channel on which sharing of a remaining resource in an uplink transmission resource is allowed.

The transceiver unit 1100 is further configured to receive data on at least one logical channel in a first logical channel and data on at least one logical channel in a second logical channel that are transmitted by the terminal device on the uplink transmission resource, where the first logical channel includes one or more logical channels, and the second logical channel includes one or more logical channels.

For example, the first indication information includes bit indication information, and when the bit indication information is a first state value, the bit indication information indicates that when there is a remaining resource in the uplink transmission resource, sharing of the remaining resource is allowed.

For example, the first indication information includes a first identifier or includes an identifier of a logical channel in the second logical channel, and the first identifier indicates a logical channel in the second logical channel.

For example, the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

In still another possible design, the communication apparatus 1000 includes a processing unit 1200 and a transceiver unit 1100.

The transceiver unit 1100 is configured to send second indication information to a terminal device, where the second indication information indicates that resource sharing is allowed on one or more logical channels in a first logical channel, and/or the second indication information indicates a logical channel on which resource sharing is allowed to be performed with one or more logical channels in a first logical channel.

The transceiver unit 1100 is further configured to receive data on at least one logical channel in the first logical channel and data on at least one logical channel in a second logical channel that are transmitted by the terminal device on an uplink transmission resource, where the first logical channel includes one or more logical channels, and the second logical channel includes one or more logical channels.

For example, the second indication information includes sharing information respectively corresponding to the one or more logical channels in the first logical channel, and the sharing information indicates that resource sharing is allowed on a corresponding logical channel.

For example, the sharing information includes bit indication information, and when the bit indication information is a second state value, the bit indication information indicates that resource sharing is allowed on a corresponding logical channel.

For example, the second indication information includes sharing information respectively corresponding to the one or more logical channels in the first logical channel, and the sharing information indicates a logical channel on which resource sharing is allowed to be performed with a corresponding logical channel.

For example, the sharing information includes a second identifier or an identifier of the logical channel on which resource sharing is allowed to be performed with the corresponding logical channel, and the second identifier indicates the logical channel on which resource sharing is allowed to be performed with the corresponding logical channel.

For example, the second indication information is carried in a configuration information element of a logical channel.

The terminal device and the network device in embodiments of this application are described above, and possible product forms of the terminal device and the network device are described below. It should be understood that a product in any form that has a function of the terminal device in FIG. 6 or a product in any form that has a function of the network device in FIG. 6 falls within the protection scope of embodiments of this application. It should be further understood that the following descriptions are merely examples, and product forms of the network device and the terminal device in embodiments of this application are not limited thereto.

In a possible implementation, in the communication apparatus shown in FIG. 6, the processing unit 1200 may be one or more processors, the transceiver unit 1100 may be a transceiver, or the transceiver unit 1100 may be a sending unit and a receiving unit, the sending unit may be a transmitter, the receiving unit may be a receiver, and the sending unit and the receiving unit are integrated into one device, for example, a transceiver. In this embodiment of this application, the processor and the transceiver may be coupled, or the like. A manner of connection between the processor and the transceiver is not limited in embodiments of this application.

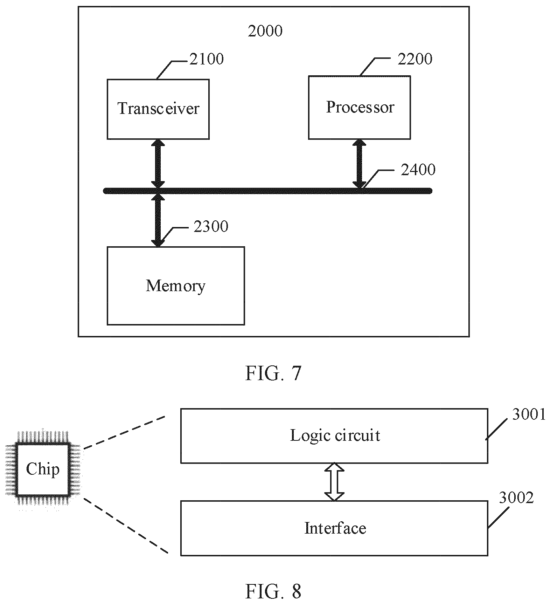

FIG. 7 is a diagram of a structure of another communication apparatus 2000 according to an embodiment of this application. The communication apparatus in FIG. 7 may be the foregoing terminal device, or may be the foregoing network device.

As shown in FIG. 7, the communication apparatus 2000 includes one or more processors 2200 and a transceiver 2100. The transceiver 2100 may implement a function of the transceiver unit 1100, and the processor 2200 may implement a function of the processing unit 1200.

**In** various implementations of the communication apparatus shown in FIG. 7, the transceiver may include a receiver machine and a transmitter machine, the receiver machine is configured to perform a receiving function (or operation), and the transmitter machine is configured to perform a transmitting function (or operation). The transceiver is configured to communicate with another device/apparatus via a transmission medium.

Optionally, the communication apparatus 2000 may further include one or more memories 2300, configured to store program instructions and/or data. The memory 2300 is coupled to the processor 2200. The coupling in this embodiment of this application may be an indirect coupling or a communication connection between apparatuses, units, or modules in an electrical form, a mechanical form, or another form, and is used for information exchange between the apparatuses, the units, or the modules. The processor 2200 may cooperate with the memory 2300. The processor 2200 may execute the program instructions stored in the memory 2300.

**In** this embodiment of this application, a specific connection medium between the transceiver 2100, the processor 2200, and the memory 2300 is not limited. **In** this embodiment of this application, the transceiver 2100, the processor 2200, and the memory 2300 are connected through a bus 2400 in FIG. 7. The bus is represented by using a thick line in FIG. 7. A manner of a connection between other components is schematically described, and is not limited thereto. The bus may be classified into an address bus, a data bus, a control bus, and the like. For ease of representation, only one bold line is used for representation in FIG. 7, but this does not mean that there is only one bus or only one type of bus.

**In** this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store program instructions and/or data.

The processor 2200 is mainly configured to process a communication protocol and communication data, control the entire communication apparatus, execute a software program, and process data of the software program. The memory 2300 is mainly configured to store the software program and the data. The transceiver 2100 may include a control circuit and an antenna. The control circuit is mainly configured to perform conversion between a baseband signal and a radio frequency signal and process the radio frequency signal. The antenna is mainly configured to receive/send a radio frequency signal in a form of an electromagnetic wave. The input/output apparatus like a touchscreen, a display, or a keyboard, is mainly configured to receive data input by a user and output data to the user.

After the communication apparatus is powered on, the processor 2200 may read the software program in the memory 2300, interpret and execute instructions of the software program, and process the data of the software program. When data needs to be sent wirelessly, the processor 2200 performs baseband processing on the to-be-sent data, and then outputs a baseband signal to a radio frequency circuit. The radio frequency circuit performs radio frequency processing on the baseband signal, and then sends a radio frequency signal in an electromagnetic wave form via the antenna. When data is sent to the communication apparatus, the radio frequency circuit receives the radio frequency signal via the antenna, converts the radio frequency signal into a baseband signal, and outputs the baseband signal to the processor 2200. The processor 2200 converts the baseband signal into data and processes the data.

In another implementation, the radio frequency circuit and the antenna may be disposed independently of a processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 7, or the like. This is not limited in embodiments of this application. The foregoing methods performed by the processor and the transceiver are merely examples. For specific steps performed by the processor and the transceiver, refer to the methods described above.

In another possible implementation, in the communication apparatus shown in FIG. 6, the processing unit 1200 may be one or more logic circuits, and the transceiver unit 1100 may be an input/output interface, or referred to as a communication interface, an interface circuit, an interface, or the like. Alternatively, the transceiver unit 1100 may be a sending unit and a receiving unit. The sending unit may be an output interface, and the receiving unit may be an input interface. The sending unit and the receiving unit are integrated into one unit, for example, an input/output interface. As shown in FIG. 8, a communication apparatus shown in FIG. 8 includes a logic circuit 3001 and an interface 3002. That is, the foregoing processing unit 1200 may be implemented through the logic circuit 3001, and the transceiver unit 1100 may be implemented through the interface 3002. The logic circuit 3001 may be a chip, a processing circuit, an integrated circuit, a system on chip (system on chip, SoC), or the like. The interface 3002 may be a communication interface, an input/output interface, a pin, or the like. For example, FIG. 8 is an example in which the communication apparatus is a chip. The chip includes the logic circuit 3001 and the interface 3002.

In this embodiment of this application, the logic circuit and the interface may be coupled to each other. A specific manner of connection between the logic circuit and the interface is not limited in this embodiment of this application.

For example, when the communication apparatus is configured to perform the method, the function, or the step performed by the terminal, the logic circuit 3001 is configured to determine, based on attribute information of an uplink transmission resource and resource mapping restriction information of a logical channel, a first logical channel for data transmission on the uplink transmission resource, where the first logical channel includes one or more logical channels, and allocate, from the uplink transmission resource, a transmission resource to at least one logical channel in the first logical channel; and determine, by the terminal device, a second logical channel when there is a remaining resource in the uplink transmission resource, where the second logical channel includes one or more logical channels, and allocate the remaining resource to at least one logical channel in the second logical channel.

The interface 3002 is configured to transmit, on the uplink transmission resource, data on the at least one piece of logic in the first logical channel and data on the at least one logical channel in the second logical channel.

For example, when the communication apparatus is configured to perform the method, the function, or the step performed by the network device, the logic circuit 3001 is configured to send first indication information to a terminal device through the interface 3002, where the first indication information indicates that when there is a remaining resource in an uplink transmission resource, sharing of the remaining resource is allowed, and/or the first indication information indicates a second logical channel on which sharing of a remaining resource in an uplink transmission resource is allowed; and receive data on at least one logical channel in a first logical channel and data on at least one logical channel in a second logical channel that are transmitted by the terminal device on the uplink transmission resource, where the first logical channel includes one or more logical channels, and the second logical channel includes one or more logical channels.

For example, when the communication apparatus is configured to perform the method, the function, or the step performed by the network device, the logic circuit 3001 is configured to send second indication information to a terminal device, where the second indication information indicates that resource sharing is allowed on one or more logical channels in a first logical channel, and/or the second indication information indicates a logical channel on which resource sharing is allowed to be performed with one or more logical channels in a first logical channel; and receive data on at least one logical channel in the first logical channel and data on at least one logical channel in a second logical channel that are transmitted by the terminal device on an uplink transmission resource, where the first logical channel includes one or more logical channels, and the second logical channel includes one or more logical channels.

It may be understood that the communication apparatus shown in embodiments of this application may implement the method provided in embodiments of this application in a form of hardware, or may implement the method provided in embodiments of this application in a form of software. This is not limited in embodiments of this application.

An embodiment of this application further provides a wireless communication system. The wireless communication system includes a network device and a terminal device. The network device and the terminal device may be configured to perform the method in any one of the foregoing embodiments.

In addition, this application further provides a computer-readable storage medium. The computer-readable storage medium stores computer code. When the computer code is run on a computer, the computer is enabled to perform operations and/or processing performed by the network device and the terminal device in the method provided in this application.

This application further provides a computer program product. The computer program product includes computer code or a computer program. When the computer code or the computer program is run on a computer, operations and/or processing performed by the network device and the terminal device in the method provided in this application are/is performed.

**In** the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. **In** addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, that is, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applied to a terminal device, and comprises:
determining, based on attribute information of an uplink transmission resource and resource mapping restriction information of a logical channel, a first logical channel for data transmission on the uplink transmission resource, wherein the first logical channel comprises one or more logical channels, and allocating, from the uplink transmission resource, a transmission resource to at least one logical channel in the first logical channel;
determining a second logical channel when there is a remaining resource in the uplink transmission resource, wherein the second logical channel comprises one or more logical channels, and allocating the remaining resource to at least one logical channel in the second logical channel; and
transmitting, on the uplink transmission resource, data on the at least one piece of logic in the first logical channel and data on the at least one logical channel in the second logical channel.

2. The method according to claim 1, wherein
the second logical channel comprises a logical channel other than the first logical channel in a plurality of logical channels of the terminal device; or
the second logical channel comprises a logical channel associated with a logical channel in the first logical channel; or
the second logical channel comprises an indicated logical channel on which sharing of the remaining resource is allowed.

3. The method according to claim 2, wherein the logical channel associated with the logical channel in the first logical channel comprises at least one of the following:
a logical channel that belongs to a same data radio bearer DRB as the logical channel in the first logical channel;
a logical channel that belongs to a same protocol data unit PDU session as the logical channel in the first logical channel; and
a pre-configured logical channel on which resource sharing is allowed to be performed with the logical channel in the first logical channel.

4. The method according to any one of claims 1 to 3, wherein the determining a second logical channel when there is a remaining resource in the uplink transmission resource comprises:
determining the second logical channel when there is a remaining resource in the uplink transmission resource, and a maximum amount of data allowed to be transmitted on the remaining resource is greater than or equal to a data amount threshold.

5. The method according to any one of claims 1 to 4, wherein the method further comprises:
receiving first indication information from a network device, wherein the first indication information indicates that when there is a remaining resource in the uplink transmission resource, sharing of the remaining resource is allowed, and/or the first indication information indicates the second logical channel on which sharing of the remaining resource is allowed; and
the determining a second logical channel comprises:
determining the second logical channel based on the first indication information.

6. The method according to claim 5, wherein the first indication information comprises bit indication information, and when the bit indication information is a first state value, the bit indication information indicates that when there is a remaining resource in the uplink transmission resource, sharing of the remaining resource is allowed.

7. The method according to claim 5, wherein the first indication information comprises a first identifier or comprises an identifier of a logical channel in the second logical channel, and the first identifier indicates a logical channel in the second logical channel.

8. The method according to any one of claims 5 to 7, wherein the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

9. The method according to any one of claims 1 to 4, wherein the method further comprises:
receiving second indication information from a network device, wherein the second indication information indicates that resource sharing is allowed on the one or more logical channels in the first logical channel, and/or the second indication information indicates a logical channel on which resource sharing is allowed to be performed with the one or more logical channels in the first logical channel; and
the determining a second logical channel comprises:
determining the second logical channel based on the second indication information.

10. The method according to claim 9, wherein the second indication information comprises sharing information respectively corresponding to the one or more logical channels in the first logical channel, and the sharing information indicates that resource sharing is allowed on a corresponding logical channel.

11. The method according to claim 10, wherein the determining the second logical channel based on the second indication information comprises:
determining the second logical channel when sharing information respectively corresponding to all logical channels in the first logical channel indicates that resource sharing is allowed.

12. The method according to claim 10 or 11, wherein the sharing information comprises bit indication information, and when the bit indication information is a second state value, the bit indication information indicates that resource sharing is allowed on a corresponding logical channel.

13. The method according to claim 9, wherein the second indication information comprises sharing information respectively corresponding to the one or more logical channels in the first logical channel, and the sharing information indicates a logical channel on which resource sharing is allowed to be performed with a corresponding logical channel.

14. The method according to claim 13, wherein the sharing information comprises a second identifier or an identifier of the logical channel on which resource sharing is allowed to be performed with the corresponding logical channel, and the second identifier indicates the logical channel on which resource sharing is allowed to be performed with the corresponding logical channel.

15. The method according to any one of claims 1 to 14, wherein the remaining resource comprises a resource other than a first resource in the uplink transmission resource, or a resource other than a second resource in the uplink transmission resource; and
the first resource is used to satisfy transmission of data buffered on the at least one logical channel in the first logical channel, and the second resource is used to satisfy a prioritized bit rate PBR respectively corresponding to the at least one logical channel in the first logical channel.

16. A data transmission method, wherein the method is applied to a network device, and comprises:
sending first indication information to a terminal device, wherein the first indication information indicates that when there is a remaining resource in an uplink transmission resource, sharing of the remaining resource is allowed, and/or the first indication information indicates a second logical channel on which sharing of a remaining resource in an uplink transmission resource is allowed; and
receiving data on at least one logical channel in a first logical channel and data on at least one logical channel in a second logical channel that are transmitted by the terminal device on the uplink transmission resource, wherein the first logical channel comprises one or more logical channels, and the second logical channel comprises one or more logical channels.

17. The method according to claim 16, wherein the first indication information comprises bit indication information, and when the bit indication information is a first state value, the bit indication information indicates that when there is a remaining resource in the uplink transmission resource, sharing of the remaining resource is allowed.

18. The method according to claim 16, wherein the first indication information comprises a first identifier or comprises an identifier of a logical channel in the second logical channel, and the first identifier indicates a logical channel in the second logical channel.

19. The method according to any one of claims 16 to 18, wherein the first indication information is carried in at least one of the following: downlink control information DCI for scheduling the uplink transmission resource, activation DCI of a configured grant CG to which the uplink transmission resource belongs, a configuration information element of the CG to which the uplink transmission resource belongs, a configuration information element of a bandwidth part BWP to which the uplink transmission resource belongs, a configuration information element of a cell to which the uplink transmission resource belongs, or a configuration information element of a cell group to which the uplink transmission resource belongs.

20. A data transmission method, wherein the method is applied to a network device, and comprises:
sending second indication information to a terminal device, wherein the second indication information indicates that resource sharing is allowed on one or more logical channels in a first logical channel, and/or the second indication information indicates a logical channel on which resource sharing is allowed to be performed with one or more logical channels in a first logical channel; and
receiving data on at least one logical channel in the first logical channel and data on at least one logical channel in a second logical channel that are transmitted by the terminal device on an uplink transmission resource, wherein the first logical channel comprises one or more logical channels, and the second logical channel comprises one or more logical channels.

21. The method according to claim 20, wherein the second indication information comprises sharing information respectively corresponding to the one or more logical channels in the first logical channel, and the sharing information indicates that resource sharing is allowed on a corresponding logical channel.

22. The method according to claim 21, wherein the sharing information comprises bit indication information, and when the bit indication information is a second state value, the bit indication information indicates that resource sharing is allowed on a corresponding logical channel.

23. The method according to claim 20, wherein the second indication information comprises sharing information respectively corresponding to the one or more logical channels in the first logical channel, and the sharing information indicates a logical channel on which resource sharing is allowed to be performed with a corresponding logical channel.

24. The method according to claim 23, wherein the sharing information comprises a second identifier or an identifier of the logical channel on which resource sharing is allowed to be performed with the corresponding logical channel, and the second identifier indicates the logical channel on which resource sharing is allowed to be performed with the corresponding logical channel.

25. A communication apparatus, comprising:
a processing unit, configured to determine, based on attribute information of an uplink transmission resource and resource mapping restriction information of a logical channel, a first logical channel for data transmission on the uplink transmission resource, wherein the first logical channel comprises one or more logical channels, and allocate, from the uplink transmission resource, a transmission resource to at least one logical channel in the first logical channel, wherein
the processing unit is further configured to determine a second logical channel when there is a remaining resource in the uplink transmission resource, wherein the second logical channel comprises one or more logical channels, and allocate the remaining resource to at least one logical channel in the second logical channel; and
a transceiver unit, configured to transmit, on the uplink transmission resource, data on the at least one piece of logic in the first logical channel and data on the at least one logical channel in the second logical channel.

26. A communication apparatus, comprising:
a transceiver unit, configured to send first indication information to a terminal device, wherein the first indication information indicates that when there is a remaining resource in an uplink transmission resource, sharing of the remaining resource is allowed, and/or the first indication information indicates a second logical channel on which sharing of a remaining resource in an uplink transmission resource is allowed, wherein
the transceiver unit is further configured to receive data on at least one logical channel in a first logical channel and data on at least one logical channel in a second logical channel that are transmitted by the terminal device on the uplink transmission resource, wherein the first logical channel comprises one or more logical channels, and the second logical channel comprises one or more logical channels.

27. A communication apparatus, comprising:
a transceiver unit, configured to send second indication information to a terminal device, wherein the second indication information indicates that resource sharing is allowed on one or more logical channels in a first logical channel, and/or the second indication information indicates a logical channel on which resource sharing is allowed to be performed with one or more logical channels in a first logical channel; and
the transceiver unit is further configured to receive data on at least one logical channel in the first logical channel and data on at least one logical channel in a second logical channel that are transmitted by the terminal device on an uplink transmission resource, wherein the first logical channel comprises one or more logical channels, and the second logical channel comprises one or more logical channels.

28. A communication apparatus, comprising a processor, wherein
the processor is coupled to a memory;
the memory is configured to store instructions; and
the processor is configured to execute the instructions, to perform the method according to any one of claims 1 to 15; or
the processor is configured to execute the instructions, to perform the method according to any one of claims 16 to 19; or
the processor is configured to execute the instructions, to perform the method according to any one of claims 20 to 24.

29. A computer-readable storage medium, wherein the computer-readable storage medium is configured to store a computer program, and when the computer program is executed, the method according to any one of claims 1 to 15 is performed; or when the computer program is executed, the method according to any one of claims 16 to 19 is performed; or when the computer program is executed, the method according to any one of claims 20 to 24 is performed.

30. A computer program product, comprising a computer program or computer code, wherein when the computer program or the computer code is run, the method according to any one of claims 1 to 15 is implemented, or the method according to any one of claims 16 to 19 is implemented, or the method according to any one of claims 20 to 24 is implemented.
